(19) Europäisches Patentamt
European Patent Office
Office européen des brevets

(11) EP 4 787 012 A1

(12) **EUROPEAN PATENT APPLICATION**

(43) Date of publication:
05.08.2026 Bulletin 2026/32

(51) International Patent Classification (IPC):
G01S 7/295 (2006.01)       G01S 13/86 (2006.01)
G01S 13/89 (2006.01)       G01S 13/931 (2020.01)

(21) Application number: 25180146.0

(22) Date of filing: 02.06.2025

(52) Cooperative Patent Classification (CPC):
G01S 13/867; G01S 7/295; G01S 7/2955;
G01S 13/89; G01S 13/931; G01S 7/417;
G01S 13/42

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 31.01.2025 EP 25155186

(71) Applicant: Elektrobit Automotive GmbH
91058 Erlangen (DE)

(72) Inventors:
• Chandrasekaran, Kavin
91058 Erlangen (DE)
• Jancura, Pavol
5612 AE Eindhoven (NL)

(74) Representative: Aumovio Corporation
AUMOVIO Germany GmbH
Taunusstraße 36
80807 München (DE)

(54) **VEHICLE, APPARATUS, DATA CARRIER, COMPUTER PROGRAM, AND METHOD FOR FUSING SENSOR DATA FROM DIFFERENT SENSORS**

(57) Embodiments of the present disclosure relate to a concept for fusing sensor data from different sensors. The method comprises obtaining radar data from a radar sensor and image data from a camera. The radar data represents the environment of the vehicle, and the image data represents the environment from an ego-perspective of the vehicle. Further, the method comprises processing the radar data using an auto encoder-decoder. In doing so, the auto encoder-decoder recovers angle information from the radar data to present features extracted from the radar data in a top view. Also, the method includes processing the image data using a variational auto encoder-decoder (VAE). The VAE obtains extracted features in a top view. Further, the method comprises fusing the extracted features with each other and providing the fused features for assisted or autonomous driving.

Fig. 2

EP 4 787 012 A1

**Description**

Embodiments of the present disclosure relate to a concept for fusing sensor data from different sensors. In particular, the present disclosure relates to an approach for fusing sensor data of a radar sensor and a camera.

Autonomous Driving (AD) technology has been primarily driven by advancements in artificial intelligence, particularly deep learning. Such technology relies on the use of multiple different sensors to enable accurate environmental perception. For example, vehicles are built with several sensors, especially, one or more cameras, radar sensors, and lidar sensors.

Particularly in clear weather conditions, cameras offer detailed visual information, making them significant for understanding complex scenes. However, in AD technology, it is also important to predict the distances of the objects ahead, where radar sensors are preferred due to their depth perception potential. Alternatively, lidar sensors generate dense point cloud data with better resolution in a three-dimensional space than other sensors. Despite these advantages, both cameras and lidar sensors may face significant performance degradation in unfavorable environments such as in bad weather conditions, while also providing low quality velocity information.

When recorded synchronously, camera and radar sensor data exhibit complementary strengths, making their fusion an attractive approach to address perception challenges, specifically in segmentation and object detection. However, effectively leveraging raw radar sensor information, especially for fusion with other sensor modalities, continues to be a significant hurdle.

One fusion approach is to transform the image data to BEV and then fuse them with radar range-azimuth (RA) tensors. Alternatively, both image and radar point cloud data are projected to the bird's-eye-view (BEV) space, where shared features are learned through independent feature extractors. Another approach suggests projecting two-dimensional image features into the 3D BEV coordinates. Another idea is to iteratively extract features from multi-view images through BEV queries.

However, existing approaches may not provide a desired accuracy and/or require a very complex network architecture (judging by their number of parameters).

Hence, there may be a demand for an improved solution for fusing sensor data of different sensors.

This demand may be satisfied by the subject-matter of the present disclosure.

Embodiments of the present disclosure provide a method for fusing sensor data of different sensors of a vehicle. The method comprises obtaining radar data from a radar sensor and image data from a camera. The radar data represents the environment of the vehicle, and the image data represents the environment from an ego-perspective of the vehicle. Further, the method comprises processing the radar data using an auto encoder-decoder. In doing so, the auto encoder-decoder recovers angle information from the radar data to present features extracted from the radar data in a top view. Also, the method includes processing the image data using a variational auto encoder-decoder (VAE). The VAE obtains extracted features in/from a top view. Further, the method comprises fusing the extracted features with each other and providing the fused features for assisted or autonomous driving.

One idea of that solution is that the VAE learns the front-view to BEV transformation automatically without a need to explicitly process the camera frames.

A skilled person having benefit from the present disclosure will appreciate that the proposed solution can be applied to different data sets (in the training and inference phase).

Another advantage is that the proposed architecture may require less parameters and, therefore, less computing resources. In practice, that may enable real-time processing, e.g., in autonomous driving applications.

It is noted that the fused data may be applied in different computer vision tasks. In some embodiments, the method further comprises applying a segmentation head to the fused extracted features for space segmentation and/or applying a detection head to the fused extracted features for object detection.

The skilled person will also appreciate that the proposed method works for different fusion techniques. The extracted features may be fused using concatenation, multiplication, or addition.

In some embodiments, the method further comprises maneuvering the vehicle based on the result of the space segmentation and/or object detection. This, e.g., enables autonomous driving and/or parking functions.

In some embodiments, the method further comprises bypassing one or more layers of the encoder-decoders for spatial information using skip connections from an encoder to a decoder of the respective encoder-decoder.

In some embodiments, fusing the extracted features comprises interpolating the extracted features for matching their dimensions. In this way, fusing the data may be facilitated.

Further embodiments provide a computer program comprising instructions which, when the computer program is executed by a computer, cause the computer to carry out an embodiment of the proposed method.

Further embodiments provide a computer-readable data carrier having stored thereon an embodiment of the proposed computer program.

Further embodiments provide an apparatus comprising one or more interfaces for communication and a data processing circuit configured to execute an embodiment of the proposed method.

Further embodiments provide a vehicle comprising an embodiment of the proposed apparatus.

Further, embodiments are now described with reference to the attached drawings. **It** should be noted that the embodiments illustrated by the referenced drawings show merely optional embodiments as an example and that the scope of the present disclosure is by no means limited to the embodiments presented:

Brief description of the drawings

Fig. 1 shows a flow chart schematically illustrating an embodiment of a method for fusing sensor data of different sensors of a vehicle;

Fig. 2 shows an example of a network architecture for the proposed solution;

Fig. 3 shows another example of a network architecture for the proposed solution; and

Fig. 4 shows a block diagram of an apparatus according to the proposed approach.

A realistic view of the vehicle's surroundings is generally offered by camera sensors, which is crucial for environmental perception. Affordable radar sensors, on the other hand, are becoming invaluable due to their robustness in variable weather conditions. However, because of their noisy output and reduced classification capability, they work best when combined with other sensor data.

The present disclosure addresses the challenge of multimodal sensor fusion by aligning radar and image data in a unified domain, prioritizing not only accuracy, but also computational efficiency. Exemplary embodiments leverage the raw range-Doppler (RD) spectrum from radar and front-view camera images as inputs. To enable effective fusion, a variational encoder-decoder architecture is employed which transforms front-view image data into a Bird's-Eye View (BEV) (polar) domain/view. Also, a radar encoder-decoder recovers angle information from radar data to obtain Range-Azimuth (RA) features. This alignment may ensure that both modalities are represented in a compatible domain, facilitating robust and efficient sensor fusion.

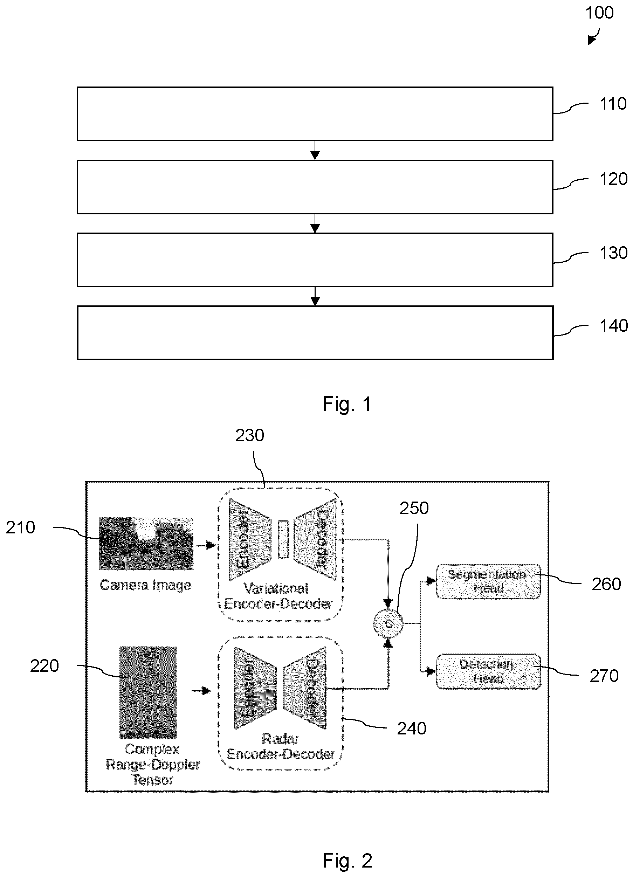

The proposed approach may be implemented as a method including multiple method steps, as outlined in more detail below with reference to Fig. 1.

Fig. 1 shows a flow chart schematically illustrating an embodiment of a method 100 for fusing sensor data of different sensors of a vehicle.

It is noted that the term "vehicle/s" is to be interpreted broadly in context of the present disclosure. So, vehicles according to the present disclosure may include any kind of vehicle, including various ground vehicles (e.g., car, truck, bus, motorcycle, and/or the like), various watercraft (e.g., boats, ships), various aircraft (e.g., planes, helicopters), and/or a combination thereof (e.g., amphibious vehicles).

The method 100 comprises obtaining 110 radar data from a radar sensor and image data from a camera.

The radar sensor is attached to the vehicle and configured to emit radio waves and receive their reflections to detect and locate objects. It works by emitting radio waves, which bounce off objects and return to the sensor, allowing it to determine the object's distance, speed, and shape.

The camera is also attached to the vehicle. In context of the present disclosure, the camera is understood as a device configured to capture images or videos by recording light or other electromagnetic radiation. Examples include a lens that focuses light onto a photosensitive surface, such as film or a digital sensor, to create such images or videos.

The fields-of-view of the radar sensor and the camera at least partly overlap so that they both capture the same environment in their overlap.

Accordingly, the radar data represents the environment of the vehicle. In practice, the radar data, e.g., is indicative or include a raw radar signal from the radar sensor. For example, the radar data include the raw radar signal from an analog-to-digital converter (ADC) for converting an analog measurement signal to a digital measurement signal.

The image data represents the environment from an ego-perspective of the vehicle. In practice, the image data may comprise one or more images, e.g., RGB images of the environment.

In automotive applications, both the radar and image data may be indicative of typical traffic environments and respective traffic objects, e.g., other traffic participants (e.g., vehicles, cyclists, pedestrians) and/or infrastructure objects (e.g., buildings, roads, bridges, traffic lights, traffic signs, etc.).

The method 100 further comprises processing 120 the radar data using an auto encoder-decoder, wherein the auto encoder-decoder recovers angle information from the radar data to present features extracted from the radar data in a top view.

In practice, the radar data, e.g., include range-Doppler data and/or a "raw" signal from an analog-to-digital converter (ADC) for converting a raw measurement signal of a radiation-sensitive surface into a digital ADC signal.

In practice, the angle information indicates an azimuth angle of radar signal reflections. In this way, the angle information, e.g., indicates a direction of objects in the environment (e.g., other traffic participants, obstacles, infrastructure objects, and/or the like) relative to the radar sensor/vehicle. The top view, e.g., is, then generated based on the azimuth angle of the objects and a range between the radar sensor/vehicle and the objects.

For recovering azimuth from radar data, the range-Doppler and/or raw ADC signals are processed by the encoder-decoder (also referred to herein as "radar (auto) encoder-decoder"). Initially, a radar including the radar sensor emits signals and captures the reflected waves, measuring the time delay (range) and frequency shift (Doppler effect) caused by the object's motion. These measurements are collected across multiple radar antennas. This allows to extract the azimuth and range. For this, the encoder-decoder, e.g., is trained to analyze Doppler shifts across different antennas and triangulate an object's azimuth. In practice, this may involve swapping channel axes and upscaling feature maps to accurately map the range and Doppler information to specific angles, resulting in a dense Range-Azimuth (RA) feature map that precisely represents the object's direction relative to the radar.

For this, the radar encoder-decoder may be trained in advance using a machine learning technique and training data including samples of the radar data and ground truth top views of the samples.

Further, the method 100 comprises processing 130 the image data using a variational auto encoder-decoder (VAE). In doing so, the VAE obtains extracted features in a top view.

For this, the encoder may produce a latent vector, which represents encoded image data. This latent vector is then passed through a decoder, which reconstructs the image into a Bird's-Eye View (BEV) polar domain.

For this, the VAE is trained in advance using a machine learning technique and training data including samples of the image data and ground truth top views of the samples.

Examples of extracted features include edge detection, texture analysis, depth information, motion patterns, and/or spatial coordinates.

Further, the method 100 includes fusing 140 the extracted features with each other and providing the fused features for assisted or autonomous driving.

For this, the extracted features may be fused by concatenating (or adding) them along their channel axis in the top view (also referred to herein as "Bird's-Eye View (BEV)"). In doing so, the image data, transformed into BEV, provide spatial and visual information, while the radar data, processed into Range-Azimuth (RA) features, offer depth and motion details.

The proposed conversion into the top view allows that the extracted features are aligned in the top view/BEV domain to ensure compatibility.

The fusion process involves combining the encoded features from both sensors, allowing the network to leverage the strengths of each modality. This combined representation is then used for tasks like object detection and free space segmentation, enhancing the overall perception accuracy and robustness.

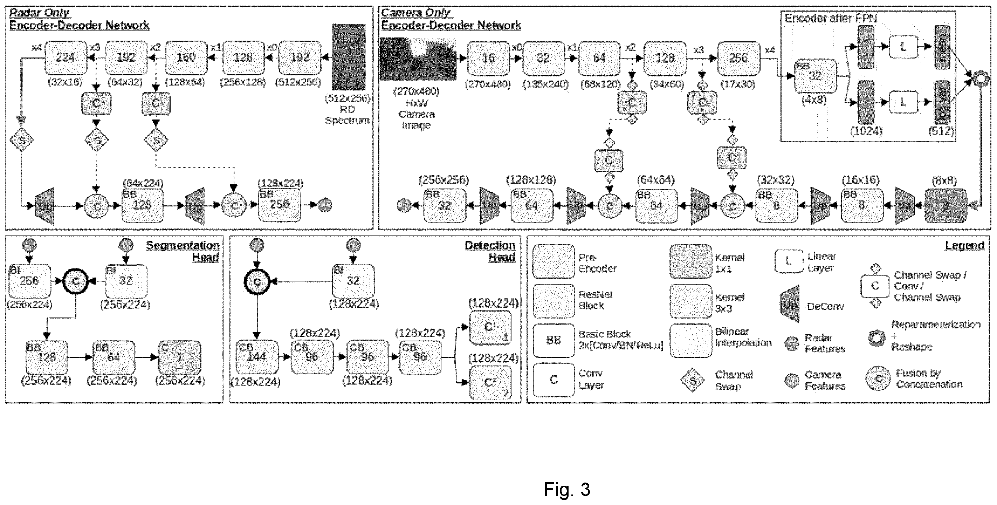

Further aspects of the proposed approach are described below with reference to Figs. 2 and 3 which show an example of a network architecture for the proposed solution (Fig. 2) and exemplary encoder-decoder architectures (Fig. 3).

The architecture includes two neural networks - a radar network for processing the radar data and a camera network for processing the image/camera data.

Radar network:

Processing the raw ADC signal or range-azimuth Doppler (RAD) (3D) tensor has a higher computational overhead than using a denser range-Doppler (RD) map which is another option to take into account, particularly if angle information can be recovered from RD maps. In the present example, there are 16 channels in the input RD tensor, since the radar sensor employed has 16 receiving antennas. This implies that each receiving antenna perceives 12 times the signature of any object, such as a vehicle in front, since there are 12 transmitting antennas in the setup. It will be measured specifically at range-Doppler positions $\{R, (D + k\Delta)[D_{max}]\}_{k=1}^{k=12}$, where $\Delta$ represents the Doppler shift brought on by the transmitted signal's phase shift $\Delta_\varphi$ and R denotes the range. $D_{max}$ is the maximum measurable Doppler value. All measured Doppler values ($D + k\Delta$) must fall within this range. If the measured Doppler value is greater than $D_{max}$, it will be trimmed to fit within $D_{max}$. As a result, the Range and Doppler values are represented as complex numbers ($R + iD$) in the range-Doppler (RD) input tensor. The input contains 32 channels with 512 and 256 range and Doppler bins, respectively, when the real and imaginary components of this tensor are rearranged and concatenated. In order to achieve this, it is proposed to use a Multi-Input Multi-Output (MIMO) pre-encoder which is configured to restructure the RD input into a comprehensible representation for encoder blocks that have 3, 6, 6, and 3 residual layers, respectively. In particular, encoded feature maps of the radar encoder-decoder can be seen as azimuth, range, and Doppler, respectively. Prior to upscaling those feature maps, the Doppler and azimuth axes are swapped using the channel swapping strategy to obtain angle information. This is illustrated with a rhombus shape in Fig. 3. Thus, dense RA feature maps, highlighting their significance for downstream detection and segmentation tasks are obtained.

Camera network:

The camera network includes a variational encoder-decoder architecture which is trained to transform the image data, e.g., front-view camera images, to a top/Bird's-Eye view. For this, the dimensions of the camera image input can be reduced to ($3\times270\times480$), which, in the present example, may be one fourth of the original image size from the image data to save memory and processing time. A pre-encoder block of the camera only architecture may perform an initial feature extraction (using a regular kernel size of 3). Following four blocks of an encoder of the VAE comprise a Feature Pyramid Network (FPN) encoder. In the present example, the FPN encoder includes 3, 6, 6, and 3 residual layers, respectively. Each encoder block executes a 2×2 downsampling that leads to a reduction in tensor size by a factor of about 16 in width and height. The downsampling is done to systematically reduce the spatial resolution so that the encoder captures essential features efficiently. After FPN, the encoder processes resulting feature maps using convolutional and linear layers that return the mean ($\mu$) and log variance ($log[\sigma^2]$). $\mu$ is the central point in the latent space, and $log[\sigma^2]$ is the uncertainty or spread of the resulting latent distribution. This is encoded as a 512-dimensional vector. Using a reparameterization trick, the VAE samples the latent vector as: $z = \mu + \sigma \cdot \varepsilon, \varepsilon \sim N(0,1)$, where, $\sigma = exp0.5 \cdot log\sigma^2$ is the standard deviation derived from the logarithm of variance; $\varepsilon \sim N(0,1)$ is a random variable chosen from a standard normal distribution with mean 0 and variance 1. More specifically, this introduces randomness ($\varepsilon$) to encourage the VAE to explore various latent representations around $\mu$. This stochasticity helps the network to generalize better and avoid over-fitting by modeling the inherent variability in the data. Moreover, instead of directly sampling ($z \sim N(\mu, \sigma 2)$), which is non-differentiable because of the stochastic nature of sampling, it is proposed to use $z = \mu + \sigma \cdot \varepsilon$, which allows the gradients to flow through $\mu$ and $\sigma$ during backpropagation when training the VAE. During inference the sampling step is bypassed and the mean ($z = \mu$) is returned, since during inference, the VAE should behave deterministically, using the most probable value (the mean) of the latent variable.

To reconstruct the desired BEV representation, the decoder then takes the latent vector z and the FPN feature maps (i.e. the extracted features) through skip connections as shown by the dotted lines in Fig. 3.

Each of the (here: two) skip connections comprise two convolutional layers: two for processing the x2 feature maps and another two dedicated to the x3 feature maps.

There is also a channel swap symbol placed just before and after the convolutional layers. This channel swapping is different from what has been done in the radar only part. Fusion by concatenation along the channel axis is feasible only when the feature dimensions are aligned. Hence, the x3 features are first swapped: ($128 \times 34 \times 60 \rightarrow 60 \times 34 \times 128$) so that the convolutional layer appropriately transforms the dimensions (conv2d):($60 \times 34 \times 128 \rightarrow 32 \times 34 \times 128$). Further, it is again swapped back so that the camera image feature is retained: ($32 \times 34 \times 128 \rightarrow 128 \times 34 \times 32$). In order to match the dimensions of the decoder features, this process may be repeated. This strategy allows one to view the encoder feature map in a dimension (swap/conv2d/swap):($128 \times 34 \times 32 \rightarrow 128 \times 32 \times 32$) that aligns with the decoder features for concatenation. The same process is applied to the x2 feature maps. This preparation helps the network in effectively fusing with the features extracted from the radar data within the segmentation and detection head during training, thus reducing computational overhead.

The network backbone can be replaced by heavier models based on resource availability.

Detection head:

A (bilinear) interpolation technique may be used to align the dimensionality of camera-decoded features (i.e., features extracted from the image data, also referred to herein as "camera features") with the features extracted from the radar data, also referred to herein as "radar features" or "RA latent features". In the present example, beating their oblations applied while in other examples also other interpolation techniques may be used. The RA latent features from the radar network are then fused with the camera features, here, e.g., by channel concatenation. Alternatively, the features may be fused through addition.

Further processing is carried out using four Convolution-Batch Norm layers with 144, 96, 96 and 96 filters, respectively. A processing branch of the detection head splits for classification and regression. A 3×3 convolutional layer with sigmoid activation is used for the classification ($C^1$), which predicts a probability map.

Every pixel on this map represents a binary classification of whether or not a vehicle is present. The predictions from the classification part have dimension 1×128×224, with a resolution of 0.8 m in range and 0.8° in azimuth.

The same 3×3 convolution layer is used in the regression part ($C^2$), which produces two feature maps. One feature map denotes the range, while the other feature map denotes the azimuth predictions of the objects detected. It is proposed to apply a focal loss to the classification output, since a significant amount of the scene is background. This may stabilize the training process and prevent the problem of class imbalance. For positive detections, the regression output is subjected to smooth L1 loss. $L_{det} = Focal(y_{cls}, \hat{y}_{cls}) + \alpha S\text{-}mooth\text{-}L1(y_{reg}, \hat{y}_{reg})$, where $y_{cls}$ and $y_{reg}$ are ground truths for the classification and regression parts, respectively. $\hat{y}_{cls}$ and $\hat{y}_{reg}$ represent the predicted values. $\alpha$ is a positive hyperparameter that symmetrizes contributions of the two loss functions.

Segmentation head:

Using bilinear interpolation, the radar- and camera-decoded feature maps have their dimensions aligned. The fusion is performed through channel concatenation, which is represented by a thick black-green circle in Fig. 3. The resulting RA maps are processed by two basic blocks. Each of these blocks performs a ConvolutionBatchNorm-ReLu operation twice. Finally, a 1x1 convolution produces a 2D output feature map with the probability that each pixel location is drivable. The dimensions of the prediction are 1×256×224 with a resolution of 0.4 m in the range which corresponds to half of the original range and 0.2° in azimuth (within [-45°, 45°], which, in the present example, is only 50% of the total azimuth field-of-view). A binary cross entropy loss (BCE) is applied to the free space segmentation head: $L_{seg} = \Sigma_{(r,a)\in\Psi} BCE(y_{seg}(r, a), \hat{y}_{seg}(r, a))$, where $\Psi = [1, B_R/2] \times [1, B_A/4]$, $y_{seg}$ represents a one-hot ground truth and $\hat{y}_{seg}$ are the prediction maps. $B_R$ and $B_A$ are range and azimuth bins, respectively.

Combined loss:

The suggested architecture can be deployed in a single- or multi-task mode. If both heads are activated a total Multi-Task Loss (MTL) may be applied which is the sum of the detection and segmentation losses for every training sample x. $L_{MTL} = \Sigma_x L_{det}(x) + \beta L_{seg}(x)$, where $\beta$ is a positive hyperparameter set empirically that balances the two tasks.

Results from the detection and/or segmentation head, then, may be used for assisted and/or autonomous driving. In practice, e.g., object information (e.g., object type, size, shape, and/or the like) from object detection and/or information on free and occupied space from the segmentation head may be used for maneuvering the vehicle through the environment.

Qualitative evaluation and quantitative comparisons with other approaches for object detection and free space segmentation showed that the proposed approach exhibits an improved trade-off between performance and required computing power.

A skilled person will appreciate that the architecture outlined above is only one of multiple exemplary architectures which may be applied for implementing embodiments of the proposed approach. It is understood that, in practice, equivalents of components and functions of the proposed architecture may be applied. For example, in other embodiments, a different layer structure, loss function, kernel size, padding parameters, batch size, learning rate, and/or interpolation procedure may be applied.

Also, the skilled person will appreciate that the proposed approach may be analogously applied not only to radar at image data but also to any other combination of radar, image, and lidar data.

In practice, the proposed approach may be implemented as a computer program comprising instructions which, when the computer program is executed by a computer, cause the computer to carry out an embodiment of the proposed approach.

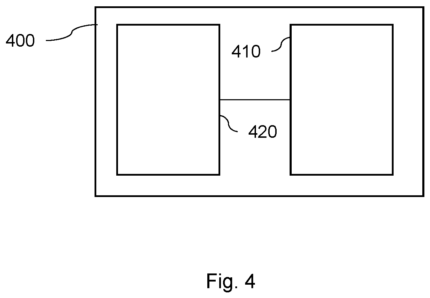

As well, it may be implemented in an apparatus, as laid out in more detail below with reference to Fig. 4

Fig. 4 shows a block diagram schematically illustrating an embodiment of such an apparatus 400. The apparatus comprises one or more interfaces 410 for communication and a data processing circuit 420 configured to execute the proposed method.

In embodiments, the one or more interfaces 410 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 420 may correspond to or comprise any type of programable hardware. So, examples of the data processing circuit 420, e.g., comprise a memory, microcontroller, field programable gate arrays, one or more central, and/or graphical processing units. To execute the proposed method, the data processing circuit 420 may be configured to access or retrieve an appropriate computer program for the execution of the proposed method from a memory of the data processing circuit 420 or a separate memory which is communicatively coupled to the data processing circuit 420.

In practice, the proposed apparatus may be installed on a vehicle. So, embodiments may also provide a vehicle comprising the proposed apparatus. In implementations, the apparatus, e.g., is part or a component of the ADS.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

**Claims**

1. A method (100) for fusing sensor data of different sensors of a vehicle, the method (100) comprising:

    obtaining radar data from a radar sensor and image data from a camera, wherein the radar data represents the environment of the vehicle, and the image data represents the environment from an ego-perspective of the vehicle;
    processing the radar data using an auto encoder-decoder, wherein the auto encoder-decoder recovers angle information from the radar data to present features extracted from the radar data in a top view;
    processing the image data using a variational auto encoder-decoder, VAE, wherein the VAE obtains extracted features in a top view; and
    fusing the extracted features with each other and providing the fused features for assisted or autonomous driving.

2. The method (100) of claim 1, wherein the method (100) further comprises applying a segmentation head to the fused extracted features for space segmentation and/or applying a detection head to the fused extracted features for object detection.

3. The method (100) of claim 1 or 2, wherein the extracted features are fused using concatenation, multiplication, or addition.

4. The method (100) of claim 2 or 3, wherein the method (100) further comprises maneuvering the vehicle based on the result of the space segmentation and/or object detection.

5. The method (100) of any one of the preceding claims, wherein the method (100) further comprises bypassing one or more layers of the encoder-decoders for spatial information using skip connections from an encoder to a decoder of the respective encoder-decoder.

6. The method (100) of any one of the preceding claims, wherein fusing the extracted features comprises interpolating the extracted features for matching their resolution, scale, and/or format.

7. A computer program comprising instructions which, when the computer program is executed by a computer, cause the computer to carry out the method (100) of any one of the claims 1 to 6.

8. A computer-readable data carrier having stored thereon the computer program of claim 7.

9. An apparatus (400) comprising:

    one or more interfaces (410) for communication; and
    a data processing circuit (420) configured to execute the method (100) of any one of the claims 1 to 6.

10. A vehicle comprising the apparatus (400) of claim 9.

100

110

120

130

140

Fig. 1

Fig. 2

Fig. 3

Fig. 4

Europäisches
Patentamt

European
Patent Office

Office européen
des brevets

# EUROPEAN SEARCH REPORT

**Application Number**

EP 25 18 0146

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CHANDRASEKARAN KAVIN ET AL: "A Resource Efficient Fusion Network for Object Detection in Bird's-Eye View using Camera and Raw Radar Data", 2024 IEEE 27TH INTERNATIONAL CONFERENCE ON INTELLIGENT TRANSPORTATION SYSTEMS (ITSC), IEEE, 24 September 2024 (2024-09-24), pages 41-48, XP034866338, DOI: 10.1109/ITSC58415.2024.10919729 [retrieved on 2025-03-20] * V. EXPERIMENTAL SETUP; figures 1-3 * * abstract * | 1-10 | INV. G01S7/295 G01S13/86 G01S13/89 G01S13/931 |
| Y | LU CHENYANG ET AL: "Monocular Semantic Occupancy Grid Mapping With Convolutional Variational Encoder-Decoder Networks", IEEE ROBOTICS AND AUTOMATION LETTERS, IEEE, vol. 4, no. 2, 1 April 2019 (2019-04-01), pages 445-452, XP011705741, DOI: 10.1109/LRA.2019.2891028 [retrieved on 2019-01-16] * abstract; figure 1 * | 1-10 | |
| A | DANIEL BAUER ET AL: "Deep, spatially coherent Occupancy Maps based on Radar Measurements", ARXIV.ORG, CORNELL UNIVERSITY LIBRARY, 201 OLIN LIBRARY CORNELL UNIVERSITY ITHACA, NY 14853, 29 March 2019 (2019-03-29), XP081159710, * the whole document * | 1 | |

**TECHNICAL FIELDS SEARCHED (IPC)**

G01S

-/--

The present search report has been drawn up for all claims

| Place of search | Date of completion of the search | Examiner |
|---|---|---|
| Munich | 9 October 2025 | Auinger, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 18 0146

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ROB WESTON ET AL: "Probably Unknown: Deep Inverse Sensor Modelling In Radar", ARXIV.ORG, CORNELL UNIVERSITY LIBRARY, 201 OLIN LIBRARY CORNELL UNIVERSITY ITHACA, NY 14853, 18 October 2018 (2018-10-18), XP080925250, * the whole document * | 1 | |
| A | SHANLIANG YAO ET AL: "Radar-Camera Fusion for Object Detection and Semantic Segmentation in Autonomous Driving: A Comprehensive Review", ARXIV.ORG, CORNELL UNIVERSITY LIBRARY, 201 OLIN LIBRARY CORNELL UNIVERSITY ITHACA, NY 14853, 23 August 2023 (2023-08-23), XP091586254, DOI: 10.1109/TIV.2023.3307157 * figure 6 * | 3 | |
| A | CN 112 801 273 A (UNIV JIANGSU) 14 May 2021 (2021-05-14) * paragraphs [0047], [0048] * | 1-10 | TECHNICAL FIELDS SEARCHED (IPC) |

The present search report has been drawn up for all claims

| Place of search | Date of completion of the search | Examiner |
|---|---|---|
| Munich | 9 October 2025 | Auinger, Florian |

EPO FORM 1503 03.82 (P04C01)

## ANNEX TO THE EUROPEAN SEARCH REPORT
## ON EUROPEAN PATENT APPLICATION NO.

EP 25 18 0146

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2025

| Patent document cited in search report | Publication date | Patent family member(s) | Publication date |
|---|---|---|---|
| CN 112801273 A | 14-05-2021 | NONE | |

EPO FORM P0459

For more details about this annex : see Official Journal of the European Patent Office, No. 12/82